# FASCICULE DE BREVET EUROPEEN

(11) **EP 1 207 255 B1**
(45) Date de publication et mention de la délivrance du brevet: **16.06.2004**
(21) Numéro de dépôt: 01127288.7
(22) Date de dépôt: 16.11.2001
(51) Int. Cl.: E05B 19/04, E05B 65/12, E06B 3/10, A45C 11/32

(54) **Module mécanique pour clé, clé munie de ce module et procédés de montage de ce module et de cette clé**
Mechanisches Modul für einen Schlüssel, Schlüssel mit einem solchen Modul und Verfahren zur Befestigung eines solchen Moduls an einem Schlüssel
Mechanical module for a key, key provided with such a module and method of mounting such a module on a key

(30) Priorité: 20.11.2000 FR 0014902
(43) Date de publication de la demande: 22.05.2002
(73) Titulaire: VALEO SECURITE HABITACLE S.A.S., 94042 Créteil Cédex (FR)
(72) Inventeur: Canard, Louis, 58000 Nevers (FR); Calor, Hervé, 58320 Pougues Les Eaux (FR)
(74) Mandataire: Hervouet, Sylvie

(56) Documents cités:
- FR-A- 2 783 011
- US-A- 4 888 970

## Description

La présente invention concerne un module mécanique pour clé, une clé munie de ce module et des procédés de montage de ce module et de cette clé.

Elle s'applique en particulier à une clé pour véhicule automobile destinée par exemple à verrouiller ou déverrouiller des ouvrants du véhicule, commander un antivol et un démarreur du véhicule, etc.

On connaît déjà dans l'état de la technique, notamment d'après FR-A-2 783 011 (FR-98 11202), une clé comportant, d'une part, un panneton, appelé également insert, monté pivotant sur un corps de clé entre des positions d'utilisation et de rangement et, d'autre part, un support pivotant, portant le panneton, muni d'un logement de réception d'un pivot et d'un bouton de commande, ces pivot et bouton de commande étant rappelés élastiquement à l'écart l'un de l'autre par un ressort de compression prenant appui sur eux.

Habituellement, le corps de la clé forme un boîtier pour des moyens électroniques de télécommande de moyens de verrouillage des ouvrants du véhicule. Le corps de la clé peut présenter des formes variées dépendant notamment de l'effet esthétique recherché.

L'invention a pour but de faciliter la standardisation des moyens mécaniques d'articulation du panneton sur le corps de clé et des moyens électroniques de télécommande, tout en optimisant la qualité de l'assemblage des éléments de la clé.

A cet effet, l'invention a pour objet un module mécanique pour clé comportant un corps et un panneton monté pivotant sur ce corps de clé entre des positions d'utilisation et de rangement, le module mécanique étant du type comprenant un support pivotant, portant le panneton, muni d'un logement de réception d'un pivot et d'un bouton de commande, ces pivot et bouton de commande étant rappelés élastiquement à l'écart l'un de l'autre par un ressort de compression prenant appui sur eux, **caractérisé en ce que** le pivot est déplaçable entre une position escamotée dans le logement de réception, pour le montage du module mécanique dans le corps de clé, et une position saillante à l'extérieur du logement de réception, pour l'accrochage de ce module mécanique dans le corps de clé, **et en ce que** le module mécanique comprend des moyens de retenue du pivot dans sa position escamotée libérables par pression sur le bouton de commande à l'encontre de la force de rappel du ressort de compression.

Suivant d'autres caractéristiques de ce module mécanique :
- les moyens de retenue du pivot comprennent au moins une butée axiale externe, ménagée sur le pivot, coopérant avec une saillie transversale interne ménagée dans le support pivotant à l'intérieur du logement de réception, formant un point dur franchissable par transmission au pivot de la pression de libération exercée sur le bouton de commande ;
- la butée axiale externe du pivot délimite un méplat coopérant avec la saillie transversale, cette dernière ayant une forme générale complémentaire du méplat pour immobiliser le pivot en rotation par rapport au support pivotant ;
- le module comprend des moyens de guidage axial et d'immobilisation en rotation du bouton de commande par rapport au support pivotant ;
- les moyens de guidage axial et d'immobilisation en rotation du bouton de commande par rapport au support pivotant comprennent au moins un coulisseau solidaire du bouton de commande coopérant avec une rainure complémentaire ménagée dans le support pivotant ;
- les moyens de guidage axial et d'immobilisation en rotation du bouton de commande par rapport au support pivotant comprennent deux coulisseaux sensiblement diamétralement opposés coopérant chacun avec une rainure complémentaire correspondante ;
- le module comprend des moyens de limitation de la course axiale du bouton de commande dans le logement de réception s'opposant à la force de rappel du ressort de compression ;
- les moyens de limitation de la course axiale du bouton de commande comprennent des moyens complémentaires de limitation de course, coopérant par emboîtement, agencés dans les coulisseau et rainure de guidage axial et d'immobilisation en rotation du bouton de commande par rapport au support pivotant ;
- le ressort de compression comprend des spires s'enroulant autour d'un axe imaginaire appelé axe du ressort de compression , le bouton de commande et le pivot comprenant chacun des moyens de solidarisation en rotation, autour de l'axe du ressort de compression, avec une extrémité correspondante de ce ressort de compression ;
- le module comprend des moyens de réglage de la course de rapprochement du bouton de commande vers le pivot en fonction de la position angulaire relative de ces pivot et bouton de commande ;
- les moyens de réglage de la course de rapprochement comprennent au moins une saignée et une languette axiales complémentaires, agencées sur le pivot et le bouton de commande, cette course de rapprochement étant, d'une part maximale lorsque les saignée et languette complémentaires sont alignées de façon à pouvoir s'emboîter l'une dans l'autre, et d'autre part minimale lorsque les saignée et languette complémentaires sont décalées angulairement entre elles ;
- le méplat immobilise le pivot en rotation par rapport au support pivotant de façon à aligner les saignée et languette complémentaires.

L'invention a également pour objet une clé munie d'un module mécanique tel que défini ci-dessus, **caractérisée en ce que** le corps de clé comporte deux flasques entre lesquels est logé le module mécanique, un premier flasque comportant un orifice d'accès au bouton de commande et le second flasque comportant un lamage de logement du pivot en position saillante, le pivot étant immobilisé en rotation par rapport au corps de clé à l'aide de moyens complémentaires agencés sur ce pivot et le second flasque du corps de clé.

Suivant d'autres caractéristiques de cette clé :
- les moyens d'immobilisation en rotation du pivot par rapport au corps de clé comprennent au moins un talon solidaire du pivot destiné à coopérer avec une butée complémentaire, ménagée sur le second flasque, délimitant un dégagement prolongeant radialement le lamage, ce dégagement autorisant un débattement angulaire du talon entre une position transitoire de montage du module mécanique dans le corps de clé et une position finale d'appui contre la butée complémentaire sous l'effet d'une force de rappel angulaire du ressort de compression autour de son axe ;
- la clé comprend des moyens d'indexation des positions d'utilisation et de rangement du panneton agencés dans le bouton de commande et le premier flasque du corps de clé ;
- les moyens d'indexation comprennent des moyens complémentaires d'indexation, coopérant par emboîtement, ménagés sur le premier flasque du corps de clé et les deux coulisseaux ;
- les moyens d'indexation comprennent deux saillies d'indexation ménagées dans le premier flasque du corps de clé, les moyens de limitation de la course axiale du bouton de commande comprennent deux saillies de limitation de course agencées dans les rainures du support pivotant, et les coulisseaux solidaires du bouton de commande comprennent des encoches étagées, les saillies d'indexation et les saillies de limitation de course du bouton de commande coopérant par emboîtement avec des parties complémentaires respectives de ces encoches étagées ;
- le support pivotant comprend deux butées sensiblement diamétralement opposées de positionnement du panneton dans ses positions d'utilisation et de rangement respectivement, ces deux butées de positionnement étant destinées à coopérer avec une des saillies d'indexation.

L'invention a encore pour objet un procédé pour le montage d'un module mécanique tel que défini ci-dessus, **caractérisé en ce que :**
- on introduit successivement dans le logement du support pivotant le bouton de commande et le ressort de compression, puis
- on introduit le pivot dans le logement en exerçant une pression suffisante pour franchir le point dur de l'extérieur vers l'intérieur du logement.

L'invention a encore pour objet un procédé pour le montage d'une clé telle que définie ci-dessus, **caractérisé en ce que :**
- on place le module mécanique entre les flasques du corps de la clé de façon à positionner, d'une part, le bouton de commande au droit de l'orifice d'accès ménagé dans le premier flasque et, d'autre part, le pivot au droit du lamage ménagé dans le second flasque, et
- on exerce une pression sur le bouton de commande de façon à libérer les moyens de retenue du pivot dans sa position escamotée.

L'invention sera mieux comprise à la lecture de la description qui va suivre, donnée uniquement à titre d'exemple et faite en se référant aux dessins dans lesquels :
- la figure 1 est une vue en perspective d'une clé selon l'invention, le panneton étant dans sa position de rangement ;
- la figure 2 est une vue en perspective, partiellement éclatée, de la clé représentée sur la figure 1, le panneton étant dans sa position d'utilisation ;
- la figure 3 est une vue en perspective éclatée de la partie cerclée 3 de la figure 1 ;
- la figure 4 est une vue en coupe axiale (suivant un plan contenant l'axe de pivotement du panneton) du module mécanique selon l'invention, avant montage dans le corps de clé ;
- la figure 5 est une vue en perspective éclatée avec des coupes partielles du corps de clé et du module mécanique avant montage dans le corps de clé ;
- la figure 6 est une vue en perspective éclatée du bouton de commande, du pivot et du second flasque du corps de clé ;
- les figures 7 à 9 sont des vues en coupe axiale du module mécanique montrant différentes étapes de montage de ce module dans le corps de clé ;
- les figures 10 et 11 sont des vues en perspectives, partiellement en coupe, du module mécanique avant et après montage dans le corps de clé ;
- les figures 12 à 14 sont des vues en coupe transversale (suivant un plan transversal à l'axe de pivotement du panneton) de la clé illustrée sur les figures 1 et 2 montrant le panneton dans des positions de rangement, intermédiaire et d'utilisation respectivement.

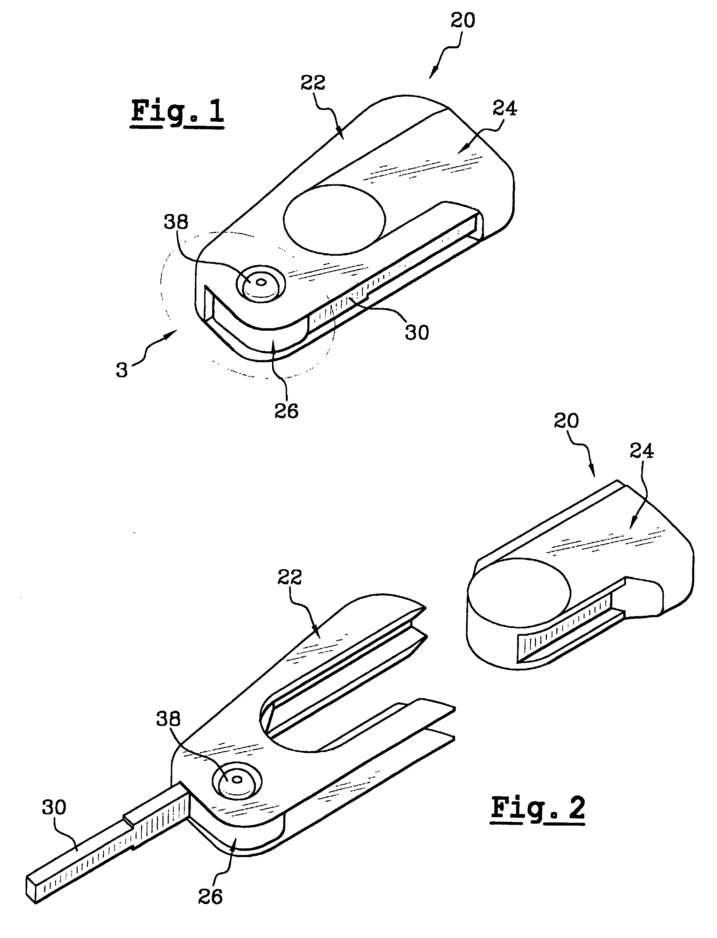

On a représenté sur les figures 1 à 3, une clé selon l'invention, désignée par la référence générale 20. Cette clé 20 est destinée par exemple à verrouiller ou déverrouiller des ouvrants du véhicule, commander un antivol et un démarreur de ce véhicule, etc...

Le clé 20 comprend un corps 22, en forme générale de chape, de préférence moulé en une seule pièce. Le corps de clé 22 porte un module électronique 24 et un module mécanique 26.

Le module électronique 24 comprend des moyens électroniques classiques destinés par exemple à télécommander des moyens de verrouillage des ouvrants du véhicule ou des moyens d'identification d'un utilisateur autorisé de ce véhicule.

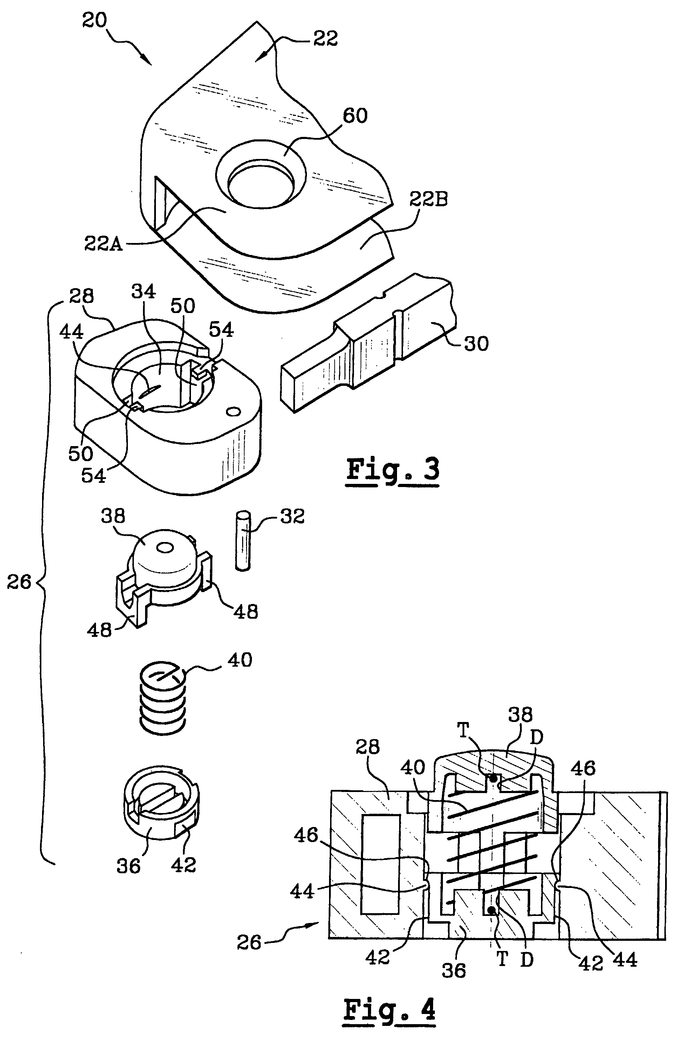

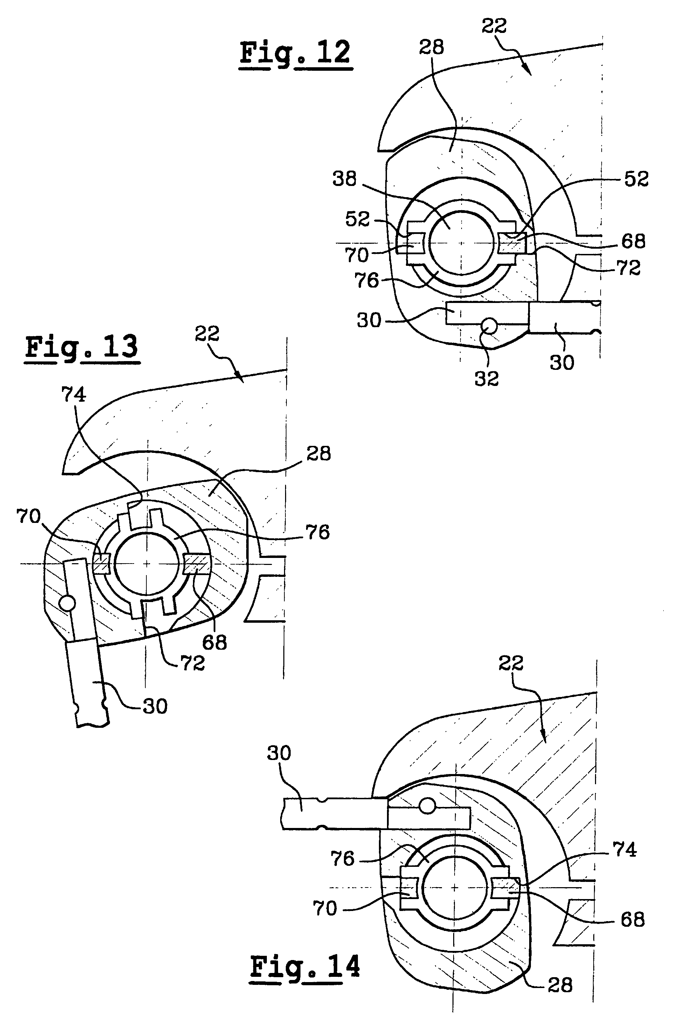

Le module mécanique 26, illustré plus en détails par exemple sur les figures 3 à 5, comprend un support pivotant 28 portant un panneton 30, de forme générale plane, encore appelé insert. Ce panneton 30 est fixé sur le support pivotant 28 à l'aide de moyens classiques, par exemple par clavetage au moyen d'une goupille 32 (voir notamment figure 12).

Le support pivotant 28 est destiné à être articulé sur le corps de clé 22 de façon à permettre le déplacement du panneton 30 entre une position de rangement, telle qu'illustrée notamment sur la figure 1, et une position d'utilisation, telle qu'illustrée notamment sur la figure 2.

Le support pivotant 28 est muni d'un logement 34, de forme générale cylindrique, coaxial à un axe imaginaire de pivotement de ce support 28 et du panneton 30 sur le corps de clé 22.

Le logement 34 est destiné à recevoir un pivot 36 et un bouton 38 de commande des déplacements du panneton 30. Le pivot 36 et le bouton de commande 38 sont rappelés élastiquement à l'écart l'un de l'autre par un ressort de compression 40 prenant appui sur chacun d'eux. Ce ressort de compression 40 comprend des spires s'enroulant autour d'un axe imaginaire, appelé «axe du ressort de compression 40».

Le pivot 36 et le bouton de commande 38 comprennent chacun des moyens de solidarisation en rotation, autour de l'axe du ressort de compression 40, avec une extrémité correspondante de ce ressort 40. Ces moyens de solidarisation en rotation comprennent, pour chaque extrémité du ressort de compression 40, un prolongement transversal T de cette extrémité de ressort emboîté dans une fente diamétrale D ménagée dans le pivot 36 ou le bouton de commande 38 selon l'extrémité du ressort considérée.

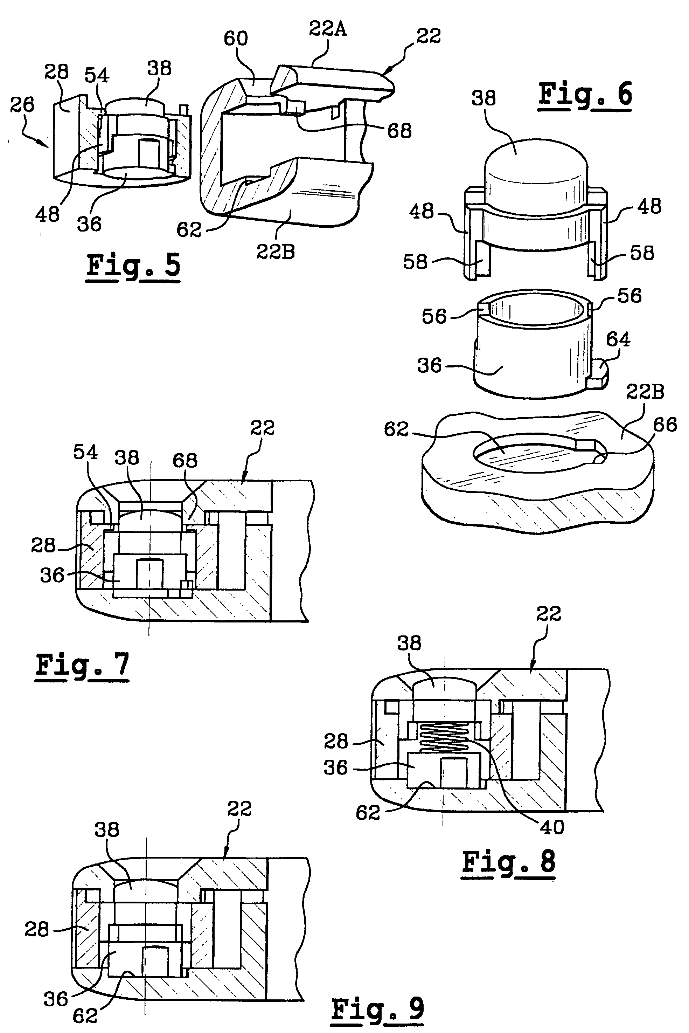

Le pivot 36 est déplaçable entre une position escamotée dans le logement 34, pour le montage du module mécanique 26 dans le corps 22 de clé, comme cela est représenté sur les figures 4 et 5, et une position saillante à l'extérieur du logement 34, pour l'accrochage de ce module mécanique 26 dans le corps.

Le pivot 36 comporte une paire de méplats 42 diamétralement opposés. Ces méplats 42 sont destinés à coopérer, lorsque le pivot 36 est en position escamotée, avec une paire de saillies transversales internes correspondantes 44. Ces saillies 44 sont ménagées dans la surface du support pivotant 28 délimitant le logement 34. Les méplats 42 et les saillies transversales 44 forment des moyens d'immobilisation en rotation du pivot 36 par rapport au support pivotant 28.

Les méplats 42 sont délimités par des butées axiales externes 46, ménagées sur le pivot 36, qui, en coopérant avec les saillies transversales 44, forment un point dur de retenue du pivot 36 dans sa position escamotée. Comme on le verra par la suite, ce point dur est franchissable par transmission au pivot 36 d'une pression de libération exercée sur le bouton de commande 38.

Bien entendu, en variante, le pivot 36 pourrait ne comporter qu'un seul méplat 42 coopérant avec une seule saillie transversale correspondante 44.

Le bouton de commande 38 est guidé axialement dans le logement 34 et immobilisé en rotation par rapport au support pivotant 28 à l'aide d'une paire de coulisseaux 48 sensiblement diamétralement opposés, solidaires de ce bouton 38, coopérant avec une paire de rainures complémentaires correspondantes 50 ménagées dans la surface du support pivotant 28 délimitant le logement 34.

Bien entendu, en variante, le bouton de commande 38 pourrait ne comporter qu'un seul coulisseau 48 coopérant avec une seule rainure correspondante 50.

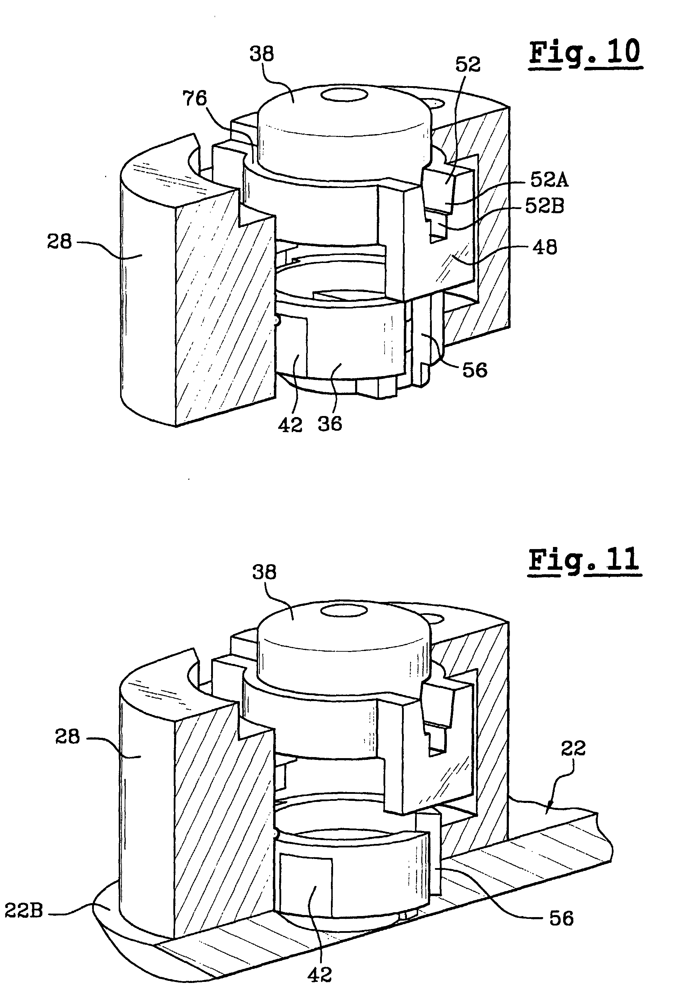

En se référant plus particulièrement à la figure 10, on voit que chaque coulisseau 48 comporte une encoche axiale étagée 52 munie d'une extrémité débouchante 52A et d'une extrémité borgne 52B, plus étroite que l'extrémité débouchante 52A. Par ailleurs, deux saillies 54 de limitation de la course axiale du bouton de commande 38 dans le logement 34 sont agencées dans les rainures 50. Ces saillies de limitation de course 54 sont disposées à proximité de l'extrémité du logement 34 la plus éloignée des saillies transversales 44. Les saillies de limitation de course 54 sont destinées à coopérer par emboîtement avec les extrémités borgnes 52B des encoches 52, de façon à s'opposer à la force de rappel en compression du ressort de 40.

En se référant notamment aux figures 6, 10 et 11, on voit que le pivot 36 est muni d'une paire de fentes ou saignées axiales 56, sensiblement diamétralement opposées. Ces saignées 56 sont destinées à coopérer par emboîtement avec des languettes axiales internes complémentaires 58 ménagées sur les coulisseaux 48 du bouton de commande 38.

Les saignées 56 et languettes 58 forment des moyens de réglage de la course de rapprochement du bouton de commande 38 vers le pivot 36 en fonction de la position angulaire relative de ces bouton et pivot.

Ainsi, lorsque les saignées 56 et languettes 48 sont alignées de façon à pouvoir s'emboîter les unes dans les autres, comme cela est représenté sur la figure 10, la course de rapprochement du bouton 38 vers le pivot 36 est maximale (voir figure 7). Par contre, lorsque les saignées 56 et languettes 58 sont décalées angulairement entre elles, comme cela est représenté sur la figure 11, la course de rapprochement du bouton 38 vers le pivot 36 est minimale (voir figure 9).

Bien entendu, la course de rapprochement du bouton 38 vers le pivot 36 peut être limitée au moyen d'une seule saignée 56 coopérant avec une seule languette complémentaire 58.

On notera que les méplats 42 immobilisent le pivot 36 en rotation par rapport au support pivotant 28 de façon à aligner les saignées 56 et languettes 58, comme cela est représenté sur la figure 10.

Les différents éléments du module mécanique 26 sont susceptibles d'être préassemblés de la façon suivante.

Initialement, on introduit le bouton de commande 38 dans le logement 34 du support pivotant 28, par l'extrémité de ce logement 34 opposée aux saillies 54 de limitation de course axiale du bouton.

Le bouton de commande 38 est guidé dans le logement 34 par emboîtement des coulisseaux 48 dans les rainures 50. Le diamètre externe du bouton de commande 38 est adapté pour que l'introduction dans le logement 34 de ce bouton 38 ne soit pas gênée par les saillies transversales 44. La course axiale du bouton de commande 38 est limitée par l'emboîtement des saillies 54 dans les extrémités borgnes 52B des encoches ménagées dans les coulisseaux 48.

Puis, on place le ressort de compression 40 dans le logement 34 en accrochant une première extrémité de ce ressort 40 dans la fente D du bouton de commande 38.

Ensuite, on accroche la seconde extrémité du ressort de compression 40 dans la fente D du pivot 36 et on introduit ce pivot 36 dans le logement 34.

Enfin, on exerce sur le pivot 36 une pression suffisante pour franchir le point dur (matérialisé par les saillies transversales 44) de l'extérieur vers l'intérieur du logement 34.

Préalablement au franchissement du point dur par le pivot 36, on aura orienté angulairement ce pivot 36 de façon à conférer au ressort de compression 40 un effet angulaire de rappel autour de son axe.

Après assemblage des différents éléments du module mécanique 26, le pivot 36 et le bouton de commande 38 sont sollicités à l'écart l'un de l'autre axialement par le ressort de compression 40. Le pivot 36 est retenu dans le logement 34 par les saillies transversales 44, alors que le bouton de commande 38 est retenu dans ce logement 34 par les saillies 54 de limitation de course.

Le module mécanique 26 est destiné à être logé entre deux flasques 22A, 22B du corps de clé. Un premier flasque 22A comporte un orifice 60 d'accès au bouton de commande 38. Le second flasque 22B comporte un lamage 62 de logement du pivot 36 en position saillante, comme cela est représenté notamment sur les figures 8 et 9.

En se référant notamment à la figure 6, on voit qu'un talon 64, solidaire du pivot 36, est destiné à coopérer avec une butée complémentaire 66, ménagée dans le second flasque 22B afin d'immobiliser en rotation le pivot 36 par rapport au corps de clé 22.

La butée 66 délimite un dégagement prolongeant radialement le lamage 62. Ce dégagement autorise un débattement angulaire du talon 64 entre une position transitoire de montage du module mécanique 26 dans le corps de clé 22 et une position finale d'appui contre la butée 66 sous l'effet de la force de rappel angulaire du ressort de compression 40.

En se référant aux figures 5 et 12 à 14, on voit que le corps de clé 22 comprend deux saillies 68, 70 d'indexation des positions d'utilisation et de rangement du panneton 30. Ces saillies d'indexation 68, 70 sont ménagées dans une face interne du premier flasque 22A du corps de clé.

Les saillies d'indexation 68, 70 sont destinées à coopérer par emboîtement avec les extrémités débouchantes 52A des encoches ménagées dans les coulisseaux 48.

En se référant plus particulièrement aux figures 12 à 14, on voit que le support pivotant 28 comprend deux butées 72, 74 sensiblement diamétralement opposées, destinées à positionner le panneton 30 respectivement dans ses positions de rangement (voir figure 12) et d'utilisation (voir figure 14). Les deux butées de positionnement 72, 74 sont destinées à coopérer avec une première saillie d'indexation 68.

Pour monter le module mécanique 26 dans le corps de clé 22, on procède de la façon suivante.

Tout d'abord, on escamote le bouton de commande 38 dans le logement 34 en exerçant sur ce bouton de commande 38 une pression s'opposant à la force de rappel en compression du ressort 40. Cet escamotage du bouton de commande 38 est rendu possible par le fait que les saignées 56 et languettes 58 complémentaires sont alignées, comme cela est représenté sur la figure 10. En effet, ceci permet une course maximale de rapprochement du bouton de commande 38 vers le pivot 36, comme cela est représenté par exemple sur la figure 7.

Puis, le bouton de commande 38 étant escamoté, on place le module mécanique 26 entre les flasques du corps de clé 22 de façon à positionner, d'une part, le bouton de commande 38 au droit de l'orifice d'accès 60 ménagé dans le premier flasque 22A et, d'autre part, le pivot 36 au droit du lamage 62 ménagé dans le second flasque 22B.

Ensuite, le bouton de commande 38 étant venu en butée contre le pivot 36, on exerce une pression suffisante sur le bouton 38 de façon à permettre à ce pivot 36 de franchir le point dur matérialisé par les saillies transversales 44. Les méplats 42 sont alors libérés des saillies transversales 44, comme cela est représenté sur la figure 11.

Après franchissement du point dur, le pivot 36 est dans sa position saillante, telle qu'illustrée notamment sur les figures 8, 9 et 11, dans laquelle il est emboîté dans le lamage 62. Le module mécanique 26 est accroché dans le corps de clé. La figure 8 illustre la clé 20 après montage du module mécanique 26 dans le corps de clé 22.

On notera que, sous l'effet du rappel élastique angulaire du ressort 40, le talon 64 du pivot 36 vient coopérer avec la butée 66 après avoir occupé sa position transitoire dans le dégagement délimité par cette butée 66. Le pivot 36 est alors immobilisé en rotation par rapport au corps de clé 22, par sollicitation élastique du talon 64 contre la butée 66.

Les principales étapes du fonctionnement de la clé 20 sont les suivantes.

Initialement, le panneton 30 de la clé est dans sa position de rangement, telle qu'illustrée sur les figures 1 et 12. Les saillies d'indexation 68, 70 sont emboîtées dans les extrémités débouchantes 52A des encoches.

Pour placer le panneton 30 dans sa position d'utilisation (figures 2 et 14), l'utilisateur appuie sur le bouton 38 à l'encontre de la force élastique de rappel en compression du ressort 40, comme cela est représenté sur la figure 9. La course de rapprochement du bouton de commande 38 vers le pivot 36 est limitée du fait du décalage angulaire entre les saignées 56 et les languettes 58.

L'enfoncement du bouton de commande 38 dans le logement 34 libère les encoches 52 des saillies d'indexation 60, 70 et permet le déplacement du support pivotant 28 conjointement avec le panneton 30 vers la position d'utilisation de ce dernier, sous l'effet de rappel angulaire du ressort de compression 40.

Pendant ce déplacement, le bouton de commande 38 est maintenu en position enfoncée par coopération des saillies d'indexation 68, 70 avec un épaulement 76 de ce bouton 38. Le support pivotant 68 et le panneton 30 se déplacent donc automatiquement jusqu'à la position illustrée sur la figure 14, en passant par la position intermédiaire illustrée sur la figure 13.

Lorsque le bouton de commande 38 est dans la position illustrée sur la figure 14, les saillies d'indexation 68, 70 s'emboîtent automatiquement dans les parties débouchantes 52A des encoches, sous l'effet de rappel en compression du ressort 40.

Pour replacer le panneton 30 en position de rangement, l'utilisateur appuie sur le bouton de commande 38 de façon à libérer les saillies d'indexation 68, 70 des encoches 52. L'utilisateur ramène ensuite le panneton 30 vers sa position de rangement en s'opposant à l'effet de rappel angulaire du ressort 40.

L'invention ne se limite pas au mode de réalisation décrit ci-dessus.

En particulier, le corps de clé peut éventuellement être fabriqué en au moins deux pièces formant chacune un flasque.

Par ailleurs, les grandes faces du panneton peuvent être orientées parallèlement à l'axe de pivotement de ce panneton, comme cela est le cas dans l'exemple illustré, ou perpendiculairement à cet axe de pivotement.

Parmi les avantages de l'invention, on notera que celle-ci permet de standardiser les moyens mécaniques d'articulation du panneton sur le corps de clé.

En effet, le module mécanique 26 peut être fabriqué séparément du corps de clé, ce dernier pouvant présenter des formes variées selon l'effet esthétique recherché.

Par ailleurs, les modules mécanique et électronique peuvent être fabriqués séparément, par des unités de fabrication spécialisées, puis assemblés avec le corps de clé pour former la clé finale.

## Revendications

1. Module mécanique (26) pour clé (20) comportant un corps (22) et un panneton (30) monté pivotant sur ce corps de clé (22) entre des positions d'utilisation et de rangement, le module mécanique (26) étant du type comprenant un support pivotant (28), portant le panneton (30), muni d'un logement de réception (34) d'un pivot (36) et d'un bouton de commande (38), ces pivot (36) et bouton de commande (38) étant rappelés élastiquement à l'écart l'un de l'autre par un ressort de compression (40) prenant appui sur eux, **caractérisé en ce que** le pivot (36) est déplaçable entre une position escamotée dans le logement de réception (34), pour le montage du module mécanique (26) dans le corps de clé (22), et une position saillante à l'extérieur du logement de réception (34), pour l'accrochage de ce module mécanique (26) dans le corps de clé (22), et **en ce que** le module mécanique (26) comprend des moyens (44,46) de retenue du pivot (36) dans sa position escamotée libérables par pression sur le bouton de commande (38) à l'encontre de la force de rappel du ressort de compression (40).

2. Module selon la revendication 1, **caractérisé en ce que** les moyens de retenue du pivot (36) comprennent au moins une butée axiale externe (46), ménagée sur le pivot (36), coopérant avec une saillie transversale (44) interne ménagée dans le support pivotant (28) à l'intérieur du logement de réception (34), formant un point dur franchissable par transmission au pivot (36) de la pression de libération exercée sur le bouton de commande (38).

3. Module selon la revendication 2, **caractérisé en ce que** la butée axiale externe du pivot (36) délimite un méplat (42) coopérant avec la saillie transversale (44), cette dernière ayant une forme générale complémentaire du méplat (42) pour immobiliser le pivot (36) en rotation par rapport au support pivotant (28).

4. Module selon l'une quelconque des revendications 1 à 3, **caractérisé en ce qu'**il comprend des moyens (48,50) de guidage axial et d'immobilisation en rotation du bouton de commande (38) par rapport au support pivotant (28).

5. Module selon la revendication 4, **caractérisé en ce que** les moyens de guidage axial et d'immobilisation en rotation du bouton de commande (38) par rapport au support pivotant (28) comprennent au moins un coulisseau (48) solidaire du bouton de commande (38) coopérant avec une rainure complémentaire (50) ménagée dans le support pivotant (28).

6. Module selon la revendication 5, **caractérisé en ce que** les moyens de guidage axial et d'immobilisation en rotation du bouton de commande (38) par rapport au support pivotant (28) comprennent deux coulisseaux (48) sensiblement diamétralement opposés coopérant chacun avec une rainure complémentaire (50) correspondante.

7. Module selon l'une quelconque des revendications 1 à 6, **caractérisé en ce qu'**il comprend des moyens (52B,54) de limitation de la course axiale du bouton de commande (38) dans le logement de réception (34) s'opposant à la force de rappel du ressort de compression (40).

8. Module selon les revendications 5 et 7 prises ensemble, **caractérisé en ce que** les moyens de limitation de la course axiale du bouton de commande (38) comprennent des moyens complémentaires (52B,54) de limitation de course, coopérant par emboîtement, agencés dans les coulisseau (48) et rainure de guidage axial et d'immobilisation en rotation du bouton de commande (38) par rapport au support pivotant (28).

9. Module selon l'une quelconque des revendications 1 à 8, **caractérisé en ce que** le ressort de compression (40) comprend des spires s'enroulant autour d'un axe imaginaire appelé axe du ressort de compression (40) , le bouton de commande (38) et le pivot (36) comprenant chacun des moyens (D) de solidarisation en rotation, autour de l'axe du ressort de compression (40), avec une extrémité correspondante de ce ressort de compression (40).

10. Module selon l'une quelconque des revendications précédentes, **caractérisé en ce qu'**il comprend des moyens (56,58) de réglage de la course de rapprochement du bouton de commande (38) vers le pivot (36) en fonction de la position angulaire relative de ces pivot (36) et bouton de commande (38).

11. Module selon la revendication 10, **caractérisé en ce que** les moyens de réglage de la course de rapprochement comprennent au moins une saignée (56) et une languette (58) axiales complémentaires, agencées sur le pivot (36) et le bouton de commande (38), cette course de rapprochement étant, d'une part, maximale lorsque les saignée (56) et languette (58) complémentaires sont alignées de façon à pouvoir s'emboîter l'une dans l'autre, et, d'autre part, minimale lorsque les saignée (56) et languette (58) complémentaires sont décalées angulairement entre elles.

12. Module selon les revendications 3 et 11 prises ensemble, **caractérisé en ce que** le méplat (42) immobilise le pivot (36) en rotation par rapport au support pivotant (28) de façon à aligner les saignée (56) et languette (58) complémentaires.

13. Clé (20) munie d'un module mécanique (26) selon l'une quelconque des revendications précédente, **caractérisée en ce que** le corps de clé (22) comporte deux flasques (22A,22B) entre lesquels est logé le module mécanique (26), un premier flasque (22A) comportant un orifice (60) d'accès au bouton de commande (38) et le second flasque (22B) comportant un lamage (62) de logement du pivot (36) en position saillante, le pivot (36) étant immobilisé en rotation par rapport au corps de clé (22) à l'aide de moyens complémentaires (64,66) agencés sur ce pivot (36) et le second flasque (22B) du corps de clé (22).

14. Clé selon la revendication 13, **caractérisée en ce que** les moyens d'immobilisation en rotation du pivot (36) par rapport au corps de clé (22) comprennent au moins un talon (64) solidaire du pivot (36) destiné à coopérer avec une butée complémentaire (66), ménagée sur le second flasque (22B), délimitant un dégagement prolongeant radialement le lamage (62), ce dégagement autorisant un débattement angulaire du talon (64) entre une position transitoire de montage du module mécanique (26) dans le corps de clé (22) et une position finale d'appui contre la butée complémentaire (66) sous l'effet d'une force de rappel angulaire du ressort de compression (40) autour de son axe.

15. Clé selon la revendication 13 ou 14, **caractérisée en ce qu'**elle comprend des moyens (68,70,52A) d'indexation des positions d'utilisation et de rangement du panneton (30) agencés dans le bouton de commande (38) et le premier flasque (22A) du corps de clé (22).

16. Clé selon la revendication 15 munie d'un module selon la revendication 6, **caractérisée en ce que** les moyens d'indexation comprennent des moyens complémentaires d'indexation (68,70,52A), coopérant par emboîtement, ménagés sur le premier flasque (22A) du corps de clé (22) et les deux coulisseaux (48).

17. Clé selon la revendication 16 munie d'un module selon les revendications 6 et 7 prises ensemble, **caractérisée**
- **en ce que** les moyens d'indexation comprennent deux saillies d'indexation (68,70) ménagées dans le premier flasque (22A) du corps de clé (22),
- **en ce que** les moyens de limitation de la course axiale du bouton de commande (38) comprennent deux saillies (54) de limitation de course agencées dans les rainures (50) du support pivotant (28), et
- **en ce que** les coulisseaux (48) solidaires du bouton de commande (38) comprennent des encoches étagées (52), les saillies d'indexation (68,70) et les saillies (54) de limitation de course du bouton de commande (38) coopérant par emboîtement avec des parties complémentaires respectives (52A,52B) de ces encoches étagées.

18. Clé selon la revendication 17, **caractérisée en ce que** le support pivotant (28) comprend deux butées (72,74), sensiblement diamétralement opposées, de positionnement du panneton (30) dans ses positions d'utilisation et de rangement respectivement, ces deux butées de positionnement (72,74) étant destinées à coopérer avec une (68) des saillies d'indexation.

19. Procédé de montage d'un module mécanique (26) selon l'une quelconque des revendications 1 à 12 prise en combinaison avec la revendication 2, **caractérisé en ce que** :
- on introduit successivement dans le logement (34) du support pivotant (28) le bouton de commande (38) et le ressort de compression (40), puis
- on introduit le pivot (36) dans le logement (34) en exerçant une pression suffisante pour franchir le point dur, de l'extérieur vers l'intérieur du logement (34).

20. Procédé de montage d'une clé (20) selon l'une quelconque des revendications 13 à 18, **caractérisé en ce que** :
- on place le module mécanique (26) entre les flasques (22A,22B) du corps de clé de façon à positionner, d'une part, le bouton de commande (38) au droit de l'orifice d'accès (60) ménagé dans le premier flasque (22A) et, d'autre part, le pivot (36) au droit du lamage (62) ménagé dans le second flasque (22B), et
- on exerce une pression sur le bouton de commande (38) de façon à libérer les moyens (44,46) de retenue du pivot (36) dans sa position escamotée.

## Patentansprüche

1. Mechanisches Modul (26) für einen Schlüssel (20), der einen Körper (22) und einen an diesem Schlüsselkörper (22) zwischen einer Gebrauchsstellung und einer Verstaustellung schwenkbar gelagerten Schlüsselbart (30) enthält, wobei das mechanische Modul (26) vom Typ mit einem Schwenkträger (28) ist, der den Schlüsselbart (30) trägt und mit einer Mulde (34) zum Aufnehmen eines Drehzapfens (36) und eines Steuerknopfs (38) versehen ist, wobei dieser Drehzapfen (36) und dieser Steuerknopf (38) von einer sich an diesen abstützenden Druckfeder (40) in Abstand zueinander elastisch zurückgestellt werden, **dadurch gekennzeichnet, dass** der Drehzapfen (36) zwischen einer in die Aufnahmemulde (34) eingefahrenen Stellung zum Montieren des mechanischen Moduls (26) im Schlüsselkörper (22) und einer nach außerhalb der Aufnahmemulde (34) vorstehenden Stellung zum Verhaken dieses mechanischen Moduls (26) im Schlüsselkörper (22) verlagerbar ist und dass das mechanische Modul (26) Mittel (44, 46) zum Halten des Drehzapfens (36) in seiner eingefahrenen Stellung enthält, die durch Druck auf den Steuerknopf (38) entgegen der Rückstellkraft der Druckfeder (40) freigegeben werden können.

2. Modul nach Anspruch 1, **dadurch gekennzeichnet, dass** die Mittel zum Halten des Drehzapfens (36) zumindest einen äußeren axialen Anschlag (46) enthalten, der am Drehzapfen (36) ausgeführt ist, mit einem inneren Quervorsprung (44) zusammenwirkt, der im Schwenkträger (28) innerhalb der Aufnahmemulde (34) ausgeführt ist, und eine festere Stelle bildet, die durch Übertragung eines Freigabedrucks auf den Drehzapfen (36) überwindbar ist, der auf den Steuerknopf (38) ausgeübt wird.

3. Modul nach Anspruch 2, **dadurch gekennzeichnet, dass** der äußere axiale Anschlag (36) des Drehzapfens (36) eine Abflachung begrenzt, die mit dem Quervorsprung (44) zusammenwirkt, wobei letzterer eine komplementäre Form zur Abflachung (42) aufweist, um den Drehzapfen (36) bezüglich des Schwenkträgers (28) drehfest festzulegen.

4. Modul nach einem der Ansprüche 1 bis 3, **dadurch gekennzeichnet, dass** es Mittel (48, 50) zum axialen Führen und drehfesten Festlegen des Steuerknopfs (38) bezüglich des Schwenkträgers (28) enthält.

5. Modul nach Anspruch 4, **dadurch gekennzeichnet, dass** die Mittel zum axialen Führen und drehfesten Festlegen des Steuerknopfs (38) bezüglich des Schwenkträgers (28) zumindest einen Gleitschieber (48) enthalten, der fest mit dem Steuerknopf (38) verbunden ist und mit einer komplementären Nut (50) zusammenwirkt, die im Schwenkträger (28) ausgebildet ist.

6. Modul nach Anspruch 5, **dadurch gekennzeichnet, dass** die Mittel zum axialen Führen und drehfesten Festlegen des Steuerknopfs (38) bezüglich des Schwenkträgers (28) zwei Gleitschieber (48) enthalten, die einander im wesentlichen diametral gegenüberliegen und jeweils mit einer entsprechenden, komplementären Nut (50) zusammenwirken.

7. Modul nach einem der Ansprüche 1 bis 6, **dadurch gekennzeichnet, dass** es Mittel (52B, 54) zum Begrenzen der axialen Wegstrecke des Steuerknopfs (38) in der Aufnahmemulde (34) enthält, die sich der Rückstellkraft der Druckfeder (40) entgegensetzen.

8. Modul nach Anspruch 5 und 7 zusammengenommen, **dadurch gekennzeichnet, dass** die Mittel zum Begrenzen der axialen Wegstrecke des Steuerknopfs (38) komplementäre Wegbegrenzungsmittel (52B, 54) enthalten, die durch Eingreifen zusammenwirken und im Gleitschieber (48) und in der Nut zum axialen Führen und drehfesten Festlegen des Steuerknopfs (38) bezüglich des Schwenkträgers (28) angeordnet sind.

9. Modul nach Anspruch 1 bis 8, **dadurch gekennzeichnet, dass** die Druckfeder (40) Windungen enthält, die sich um eine imaginäre Achse, die sogenannte Achse der Druckfeder (40), wickeln, wobei der Steuerknopf (38) und der Drehzapfen (36) jeweils Mittel (D) zum drehfesten Verbinden mit einem entsprechenden Ende dieser Druckfeder (40) bezüglich einer Drehung um die Achse der Druckfeder (40) enthalten.

10. Modul nach einem der vorangehenden Ansprüche, **dadurch gekennzeichnet, dass** es Mittel (56, 58) zum Einstellen des Annäherungswegs des Steuerknopfs (38) zum Drehzapfen (36) je nach relativer Winkelstellung dieses Drehzapfens (26) und dieses Steuerknopfs (38) enthält.

11. Modul nach Anspruch 10, **dadurch gekennzeichnet, dass** die Annäherungswegeinstellmittel zumindest einen Einschnitt (56) und eine Zunge (58) enthalten, die axial und komplementär ausgebildet und am Drehzapfen (36) und am Steuerknopf (38) angeordnet sind, wobei dieser Annäherungsweg einerseits maximal ist, wenn der Einschnitt (56) und die komplementäre Zunge (58) so ausgerichtet sind, dass sie ineinander greifen können, und andererseits minimal ist, wenn der Einschnitt (56) und die komplementäre Zunge (58) winklig zueinander versetzt sind.

12. Modul nach Anspruch 3 und 11 zusammengenommen, **dadurch gekennzeichnet, dass** die Abflachung (42) den Drehzapfen (36) bezüglich des Schwenkträgers (28) drehfest festlegt, so dass der Einschnitt (56) und die komplementäre Zunge (58) zueinander ausgerichtet sind.

13. Schlüssel (20), ausgestattet mit einem mechanischen Modul (26) nach einem der vorangehenden Ansprüche, **dadurch gekennzeichnet, dass** der Schlüsselkörper (22) zwei Flansche (22A, 22B) enthält, zwischen denen das mechanische Modul (26) aufgenommen ist, wobei ein erster Flansch (22A) eine Zugangsöffnung (60) zum Steuerknopf (38) enthält und der zweite Flansch (22B) eine Einsenkung (62) zum Aufnehmen des Drehzapfens (36) in der vorstehenden Stellung aufweist, wobei der Drehzapfen (36) bezüglich des Schlüsselkörpers (22) mit Hilfe von komplementären Mitteln (64, 66) drehfest festgelegt ist, die an diesem Drehzapfen (36) und am zweiten Flansch (22B) des Schlüsselkörpers (22) angeordnet sind.

14. Schlüssel nach Anspruch 13, **dadurch gekennzeichnet, dass** die Mittel zum drehfesten Festlegen des Drehzapfens (36) bezüglich des Schlüsselkörpers (22) zumindest einen fest mit dem Drehzapfen (36) verbundenen Ansatz (64) enthalten, der dazu bestimmt ist, mit einem Gegenanschlag (66) zusammenzuwirken, der am zweiten Flansch (22B) ausgebildet ist und eine die Einsenkung (62) radial verlängernde Ausnehmung begrenzt, wobei diese Ausnehmung eine Winkelausfederung des Ansatzes (64) zwischen einer Übergangsstellung zum Montieren des mechanischen Moduls (26) im Schlüsselkörper (22) und einer Endstellung zum Abstützen am Gegenanschlag (66) unter der Wirkung einer Winkelrückstellkraft der Druckfeder (40) um ihre Achse gestattet.

15. Schlüssel nach Anspruch 13 oder 14, **dadurch gekennzeichnet, dass** er Mittel (68, 70, 52A) zum Indexieren der Gebrauchs- und der Verstaustellung des Schlüsselbarts (30) enthält, die im Steuerknopf (38) und im ersten Flansch (22A) des Schlüsselkörpers (22) angeordnet sind.

16. Schlüssel nach Anspruch 15, ausgestattet mit einem Modul nach Anspruch 6, **dadurch gekennzeichnet, dass** die Indexierungsmittel komplementäre Indexierungsmittel (68, 70, 52A) enthalten, die durch Ineinandergreifen zusammenwirken und am ersten Flansch (22A) des Schlüsselkörpers (22) und an den beiden Gleitschiebern (48) ausgebildet sind.

17. Schlüssel nach Anspruch 16, ausgestattet mit einem Modul nach Anspruch 6 und 7 zusammengenommen, **dadurch gekennzeichnet, dass**
- die Indexierungsmittel zwei Indexierungsvorsprünge (68, 70) enthalten, die im ersten Flansch (22A) des Schlüsselkörpers (22) ausgebildet sind,
- die Mittel zum Begrenzen der axialen Wegstrecke des Steuerknopfs (38) zwei Wegbegrenzungsvorsprünge (54) enthalten, die in den Nuten (50) des Schwenkträgers (28) angeordnet sind, und
- die fest mit dem Steuerknopf (38) verbundenen Gleitschieber (48) abgestufte Aussparungen (52) enthalten, wobei die Indexierungsvorsprünge (68, 70) und die Vorsprünge (54) zum Begrenzen der Wegstrecke des Steuerknopfs (38) durch Eingreifen mit jeweiligen Gegengliedern (52A, 52B) dieser abgestuften Aussparungen zusammenwirken.

18. Schlüssel nach Anspruch 17, **dadurch gekennzeichnet, dass** der Schwenkträger (28) zwei im wesentlichen diametral entgegengesetzte Anschläge (72, 74) zum Positionieren des Schlüsselbarts (30) jeweils in seiner Gebrauchsund seiner Verstaustellung enthält, wobei diese beiden Positionieranschläge (72, 74) dazu bestimmt sind, mit dem einen Indexierungsvorsprung (68) zusammenzuwirken.

19. Verfahren zum Montieren eines mechanischen Moduls (26) nach einem der Ansprüche 1 bis 12 in Kombination mit Anspruch 2, **dadurch gekennzeichnet, dass**
- der Steuerknopf (38) und die Druckfeder (40) nacheinander in die Aufnahme (34) des Schwenkträgers (28) eingeführt werden, wonach
- der Drehzapfen (36) in die Aufnahme (34) eingeführt wird, indem von außerhalb nach innerhalb der Aufnahme (34) ein ausreichender Druck ausgeübt wird, um die festere Stelle zu überwinden.

20. Verfahren zum Montieren eines Schlüssels (20) nach einem der Ansprüche 13 bis 18, **dadurch gekennzeichnet, dass**
- das mechanische Modul (26) zwischen die Flansche (22A, 22B) des Schlüsselkörpers so gesetzt wird, dass einerseits der Steuerknopf (38) in senkrechter Verlängerung der im ersten Flansch (22A) ausgeführten Zugangsöffnung (60) und andererseits der Drehzapfen (36) in senkrechter Verlängerung der im zweiten Flansch (22B) ausgeführten Einsenkung (62) positioniert wird, und
- auf den Steuerknopf (38) ein Druck ausgeübt wird, so dass die Mittel (44, 46) zum Halten des Drehzapfens (36) in seiner eingefahrenen Stellung freigegeben werden.

## Claims

1. Mechanical module (26) for a key (20) comprising a body (22) and a web (30) mounted so as to pivot on this key body (22) between positions of use and storage, the mechanical module (26) being of the type comprising a pivoting support (28), carrying the web (30), provided with a housing (34) receiving a pivot (36) and a control button (38), this pivot (36) and control button (38) being elastically returned away from each other by a compression spring (40) bearing on them, **characterised in that** the pivot (36) can be moved between a retracted position in the reception housing (34), for mounting the mechanical module (26) in the key body (22), and a position projecting outside the reception housing (34), for attaching this mechanical module (26) in the key body (22), and **in that** the mechanical module (26) comprises means (44, 46) of holding the pivot (36) in its retracted position which can be released by pressure on the control button (38) counter to the return force of the compression spring (40).

2. Module according to Claim 1, **characterised in that** the means of holding the pivot (36) comprise at least one external axial stop (46), provided on the pivot (36), cooperating with an internal transverse projection (44) provided in the pivoting support (28) inside the reception housing (34), forming a tight spot which can be passed by transmission to the pivot (36) of the release pressure exerted on the control button (38).

3. Module according to Claim 2, **characterised in that** the external axial stop of the pivot (36) delimits a flat (42) cooperating with the transverse projection (44), the latter having an overall shape complementary to the flat (42) in order to immobilise the pivot (36) rotationally with respect to the pivoting support (28).

4. Module according to any one of Claims 1 to 3, **characterised in that** it comprises means (48, 50) of axial guidance and rotational immobilisation of the control button (38) with respect to the pivoting support (28).

5. Module according to Claim 4, **characterised in that** the means of axial guidance and rotational immobilisation of the control button (38) with respect to the pivoting support (28) comprise at least one slide (48) integral with the control button (38) cooperating with a complementary groove (50) provided in the pivoting support (28).

6. Module according to Claim 5, **characterised in that** the means of axial guidance and rotational immobilisation of the control button (38) with respect to the pivoting support (28) comprise two substantially diametrically opposite slides (48) each cooperating with a corresponding complementary groove (50).

7. Module according to any one of Claims 1 to 6, **characterised in that** it comprises means (52B, 54) of limiting the axial travel of the control button (38) in the reception housing (34) opposing the return force of the compression spring (40).

8. Module according to Claims 5 and 7 taken together, **characterised in that** the means of limiting the axial travel of the control button (38) comprise complementary travel limitation means (52B, 54), cooperating by fitting together, arranged in the slide (48) and groove for axial guidance and rotational immobilisation of the control button (38) with respect to the pivoting support (28).

9. Module according to any one of Claims 1 to 8, **characterised in that** the compression spring (40) comprises turns wound around an imaginary axis referred to as the axis (40) of the compression spring, the control button (38) and the pivot (36) each comprising means (D) of rotational connection, about the axis of the compression spring (40), with a corresponding end of this compression spring (40).

10. Module according to any one of the preceding claims, **characterised in that** it comprises means (56, 58) of adjusting the approach travel of the control button (38) towards the pivot (36) according to the relative angular positions of this pivot (36) and control button (38).

11. Module according to Claim 10, **characterised in that** the means of adjusting the approach travel comprise at least one complementary axial groove (56) and tongue (58), arranged on the pivot (36) and control button (38), this approach travel being on the one hand at a maximum when the complementary groove (56) and tongue (58) are aligned so as to be able to fit one in the other, and on the other hand at a minimum when the complementary groove (56) and tongue (58) are offset angularly to each other.

12. Module according to Claims 3 and 11 taken together, **characterised in that** the flat (42) immobilises the pivot (36) rotationally with respect to the pivoting support (28) so as to align the complementary groove (56) and tongue (58).

13. Key (20) provided with a mechanical module (26) according to any one of the preceding claims, **characterised in that** the key body (22) comprises two plates (22A, 22B) between which the mechanical module (26) is housed, a first plate (22A) comprising an access orifice (60) to the control button (38) and the second plate (22B) comprising a countersink (62) for housing the pivot (36) in the projecting position, the pivot (36) being immobilised rotationally with respect to the body (22) of the key by means of complementary means (64, 66) arranged on this pivot (36) and the second plate (22B) of the key body (22).

14. Key according to Claim 13, **characterised in that** the means of rotationally immobilising the pivot (36) with respect to the key body (22) comprise at least one heel (64) fixed to the pivot (36) intended to cooperate with a complementary stop (66), provided on the second plate (22B), delimiting a recess radially extending the countersink (62), this recess allowing an angular movement of the heel (64) between a temporary position of mounting the mechanical module (26) in the key body (22) and a final position of abutment against the complementary stop (66) under the effect of an angular return force of the compression spring (40) around its axis.

15. Key according to Claim 13 or 14, **characterised in that** it comprises means (68, 70, 52A) of locating the positions of use and storage of the web (30) arranged in the control button (38) and the first plate (22A) of the key body (22).

16. Key according to Claim 15, provided with a module according to Claim 6, **characterised in that** the locating means comprise complementary locating means (68, 70, 52A), cooperating by fitting together, provided on the first plate (22A) of the key body (22) and the two slides (48).

17. Key according to Claim 16 provided with a module according to Claims 6 and 7 taken together, **characterised**
- **in that** the locating means comprise two locating projections (68, 70) provided in the first plate (22A) of the key body (22),
- **in that** the means of limiting the axial travel of the control button (38) comprise two travel limitation projections (54) arranged in the grooves (50) of the pivoting support (28), and
- **in that** the slides (48) integral with the control button (38) comprise stepped notches (52), the locating projections (68, 70) and the projections (54) limiting the travel of the control button (38) cooperating by fitting together with respective complementary parts (52A, 52B) of these stepped notches.

18. Key according to Claim 17, **characterised in that** the pivoting support (28) comprises two substantially diametrically opposite stops (72, 74) for positioning the web (30) in its positions of use and storage respectively, these two positioning stops (72, 74) being intended to cooperate with one (68) of the locating projections.

19. Method of mounting a mechanical module (26) according to any one of Claims 1 to 12 taken in combination with Claim 2, **characterised in that**:
- the control button (38) and the compression spring (40) are introduced successively into the housing (34) of the pivoting support (28), and then
- the pivot (36) is introduced into the housing (34) by exerting sufficient pressure in order to pass the tight spot from the outside towards the inside of the housing (34).

20. Method of mounting a key (20) according to any one of Claims 13 to 18, **characterised in that**:
- the mechanical module (26) is placed between the plates (22A, 22B) of the body of the key so as to position on the one hand the control button (38) in line with the access orifice (60) provided in the first plate (22A) and on the other hand the pivot (36) in line with the countersink (62) provided in the second plate (22B), and
- a pressure is exerted on the control button (38) so as to release the means (44, 46) of keeping the pivot (36) in its retracted position.
